# EUROPÄISCHE PATENTANMELDUNG

(11) **EP 1 493 530 A1**
(43) Veröffentlichungstag der Anmeldung: **05.01.2005**
(21) Anmeldenummer: 03102025.8
(22) Anmeldetag: 04.07.2003
(51) Int. Cl.: B23Q 1/34, B23Q 1/62, B23Q 1/58, B23Q 5/027, B23B 29/12, H01L 41/09

(54) **Werkzeugkopf mit piezoelektrischen Aktuatoren**

(71) Anmelder: HESS, Peter, 6318 Walchwil (CH)
(72) Erfinder: HESS, Peter, 6318 Walchwil (CH)
(74) Vertreter: Falk, Urs, Dr.

(57) **Zusammenfassung**

Ein Werkzeugkopf (1) umfasst eine Halterung (2) für die Aufnahme eines Werkzeugs (3) und zwei Aktuatoren (4, 5), die über je einen Steg (6, 7) mit der Halterung (2) verbunden sind. Die Aktuatoren (4, 5) ermöglichen einerseits eine Auslenkung der Halterung (2) aus einer Ruhelage um wenige Mikrometer und andererseits die Beaufschlagung der Halterung (2) mit Ultraschall. Zu diesem Zweck enthalten die Aktuatoren (4, 5) einen piezoelektrischen Antrieb (12). Der Werkzeugkopf (1) kann je nach Anwendung auf einer herkömmlichen Werkzeugmaschine oder auf dem Bestückungskopf eines Montageautomaten montiert werden. Der Werkzeugkopf (1) eignet sich für viele Anwendungen, insbesondere für die Herstellung mikromechanischer Strukturen oder die Montage und den Zusammenbau von optischen oder mikromechanischen Bauteilen.

## Beschreibung

Die Erfindung betrifft einen Werkzeugkopf.

Auf den Gebieten der Mikrosystemtechnik bzw. der Nanotechnologie wie auch der Feinwerktechnik und der Halbleitermontagetechnik stellen sich vielfältige Probleme wie beispielsweise die Herstellung einer mit mikromechanischen Strukturen versehenen Oberfläche, die präzise Montage von winzig kleinen optischen Bauelementen, der höchste Positionierungsgenauigkeiten erfordernde Zusammenbau von Mikrosystemen, usw.

Die Erfindung schafft Abhilfe durch einen vielseitig verwendbaren Werkzeugkopf. Der Werkzeugkopf umfasst eine Halterung für die Aufnahme eines Werkzeugs und zwei Aktuatoren, die über je einen Steg mit der Halterung verbunden sind. Die Aktuatoren ermöglichen einerseits eine Auslenkung der Halterung aus einer Ruhelage um wenige Mikrometer und andererseits die Beaufschlagung der Halterung mit Ultraschall. Zu diesem Zweck enthalten die Aktuatoren einen piezoelektrischen Antrieb. Der Werkzeugkopf kann je nach Anwendung auf einer herkömmlichen Werkzeugmaschine oder auf dem Bestückungskopf eines Montageautomaten montiert werden. Der Werkzeugkopf eignet sich für viele Anwendungen, insbesondere für die Herstellung mikromechanischer Strukturen oder die Montage und den Zusammenbau von optischen oder mikromechanischen Bauteilen.

Es gibt auch Anwendungen, bei denen der Werkzeugkopf nur entlang einer einzigen Achse bewegbar sein oder schwingen können muss. In diesen Fällen weist der Werkzeugkopf nur einen einzigen Aktuator auf.

Nachfolgend werden Ausführungsbeispiele der Erfindung anhand der Zeichnung näher erläutert. Die Figuren sind nicht massstäblich gezeichnet.

Es zeigen:
- Fig. 1: einen erfindungsgemässen Werkzeugkopf,
- Fig. 2: den Werkzeugkopf in einer Schnittzeichnung, und
- Fig. 3: einen weiteren Werkzeugkopf,
- Fig. 4: in Aufsicht einen Aktuator des Werkzeugkopfs, und
- Fig. 5: ein Führungselement für eine Halterung des Werkzeugkopfs.

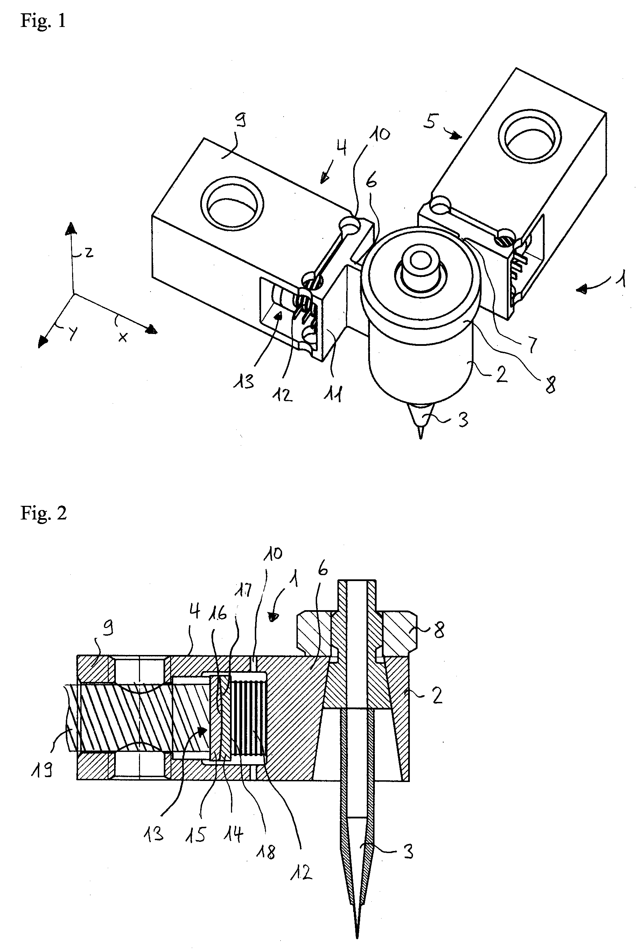

Die Fig. 1 zeigt in perspektivischer Ansicht einen erfindungsgemässen Werkzeugkopf 1. Die Achsen eines kartesischen Koordinatensystems sind mit x, y und z bezeichnet. Der Werkzeugkopf besteht aus einer Halterung 2 für die Aufnahme eines Werkzeugs 3 und aus zwei Aktuatoren 4 und 5, die je über einen Steg 6 bzw. 7 mit der Halterung 2 verbunden sind. Die beiden Stege 6 und 7 (und somit auch die beiden Aktuatoren 4 und 5) sind orthogonal zueinander angeordnet. Die beiden Aktuatoren 4 und 5 sind an einer nicht dargestellten, in der z-Richtung verstellbaren Platte befestigt. Die beiden Aktuatoren 4 und 5 sind identisch aufgebaut, im folgenden wird deshalb nur der eine Aktuator 4 näher beschrieben. Im Beispiel umfasst die Halterung 2 eine mittels einer Mutter 8 lös- und schliessbare Spannzange, in der das Werkzeug 3 eingeklemmt ist.

Der Aktuator 4 besteht aus einem Körper 9 und einer mit dem Körper 9 durch vier Stege 10 (in der Figur sind nur drei Stege 10 sichtbar) verbundenen Frontplatte 11, sowie einem aus piezoelektrischen Elementen bestehenden piezoelektrischen Antrieb 12. Die vier Stege 10 bilden ein Festkörpergelenk, das die Frontplatte 11 mit dem Körper 9 verbindet. Von der Frontplatte 11 steht der Steg 6 ab, der die Frontplatte 11 und die Halterung 2 verbindet. Der piezoelektrische Antrieb 12 ist zwischen der Frontplatte 11 und dem Körper 9 eingespannt. Wenn der piezoelektrische Antrieb 12 mit einer Gleichspannung beaufschlagt wird, dann verschiebt sich die Frontplatte 11 relativ zum Körper 9 in der x-Richtung. Wenn der piezoelektrische Antrieb 12 mit einer Wechselspannung beaufschlagt wird, dann schwingt die Frontplatte 11 relativ zum Körper 9 in der x-Richtung hin und her.

Die Befestigung des piezoelektrischen Antriebs 12 im Aktuator 4 erfolgt über einen Kopplungsmechanismus 13, um eine Verkantung des piezoelektrischen Antriebs 12 beim Einbau wie auch im Betrieb zu verhindern.

Die Fig. 2 zeigt eine Schnittzeichnung des Werkzeugkopfs 1, wobei der Schnitt durch den Steg 6 geht und den Aufbau des Aktuators 4 zeigt. Der Kopplungsmechanismus 13 umfasst zwei aneinander anliegende Körper 14 und 15, deren einander zugewandte Flächen 16 bzw. 17 Kugelflächen sind. Eine der Fläche 17 gegenüberliegende Fläche 18 des Körpers 14 ist eine ebene Fläche, die dank des Kopplungsmechanismus 13 im wesentlichen parallel zur Frontplatte 11 ausgerichtet ist. Der Körper 9 enthält ein in x-Richtung verlaufendes Gewinde, in das eine Schraube 19 hineingeschraubt ist, die mit einem Ende gegen den Körper 15 des Kopplungsmechanismus 13 drückt, so dass der piezoelektrische Antrieb 12 zwischen der Frontplatte 11 und dem Körper 14 eingespannt ist. Die beiden Kugelflächen stellen ein Lagerelement dar und sorgen dafür, dass die Fläche 18 plan an der gegenüberliegenden Fläche des piezoelektrischen Elements 12 anliegt, unabhängig von der Kraft oder dem Drehmoment, das die Schraube 19 auf den Kopplungsmechanismus 13 ausübt. Beim Zusammenbau des Aktuators 4 wird der Körper 14 mittels eines Werkzeugs festgehalten, damit er sich infolge des beim Anziehen von der Schraube 19 ausgeübten Drehmoments nicht dreht. Damit sich die Schraube 19 im Betrieb nicht löst, wird sie entweder mit dem Körper 9 verklebt oder mit einer Kontermutter gesichert.

Der Kopplungsmechanismus 13 kann auch auf andere Weise realisiert werden. Im Prinzip genügt es, wenn die Körper 14 und 15 nur entlang einer parallel zur z-Achse verlaufenden Linie oder zylindrischen Fläche in Berührung sind. Wenn die sich berührenden Flächen 16 und 17 der Körper 14 und 15 kugelförmig oder zylinderförmig sind, dann ist das Risiko einer Abplattung infolge der im Betrieb auftretenden Ultraschallschwingungen viel geringer als bei einer linienförmigen Berührung.

Im Betrieb wird der piezoelektrische Antrieb des Aktuators 4 mit einer Gleichspannung, einer Wechselspannung oder einer Kombination aus Gleichspannung und Wechselspannung beaufschlagt. Eine Gleichspannung bewirkt eine Verschiebung der Frontplatte 11 relativ zum Körper 9 entlang der x-Achse. Eine Wechselspannung bringt die Frontplatte 11 relativ zum Körper 9 in x-Richtung zum Schwingen. Die Frequenz der Wechselspannung liegt im Ultraschallbereich. Wenn der Wechselspannung eine Gleichspannung überlagert wird, dann bewirkt die Gleichspannung eine Verschiebung des Nullpunkts der Schwingungen.

Die Bewegungen der Frontplatte 11 des ersten Aktuators 4 werden über den als Blattfeder wirkenden Steg 6 auf die Halterung 2 übertragen. Ebenso werden die Bewegungen der Frontplatte des zweiten Aktuators 5 über den ebenfalls als Blattfeder wirkenden Steg 7 auf die Halterung 2 übertragen. Dabei verbiegen sich die Stege 6 bzw. 7 und die Halterung 2 wird aus ihrer Ruhelage ausgelenkt. Die Länge der Stege 6 und 7 wie auch die Geometrie der Stege 10 ist so gewählt, dass die Stege im Betrieb Auslenkungen von wenigen Mikrometern ermöglichen, ohne den Bereich der elastischen Deformation zu verlassen.

Der Werkzeugkopf 1 lässt sich für eine Vielzahl von Anwendungen verwenden, wobei ein der Anwendung angepasstes Werkzeug 3 in die Halterung 2 eingesetzt wird. Der Werkzeugkopf kann am Kopf einer beliebigen Werkzeugmaschine befestigt werden, wobei der Kopf der Werkzeugmaschine in den drei Richtungen x, y und z eines kartesischen Koordinatensystems oder in drei Raumrichtungen eines beliebigen anderen Koordinatensystems bewegbar ist. Die Werkzeugmaschine verhält sich wie ein Roboter, der den erfindungsgemässen Werkzeugkopf im Raum bewegt, so dass mit dem Werkzeugkopf verschiedene Arbeiten durchgeführt werden können, die eine die Positionierungsgenauigkeit der Werkzeugmaschine übersteigende Genauigkeit erfordern. Für viele Anwendungen ist es erforderlich, dass die Positionierungsgenauigkeit des Werkzeugkopfs auch in der z-Richtung grösser ist als die der Werkzeugmaschine. Für diese Anwendungen kann der erfindungsgemässe Werkzeugkopf mit einem piezoelektrischen Antrieb für die z-Richtung ausgestattet werden.

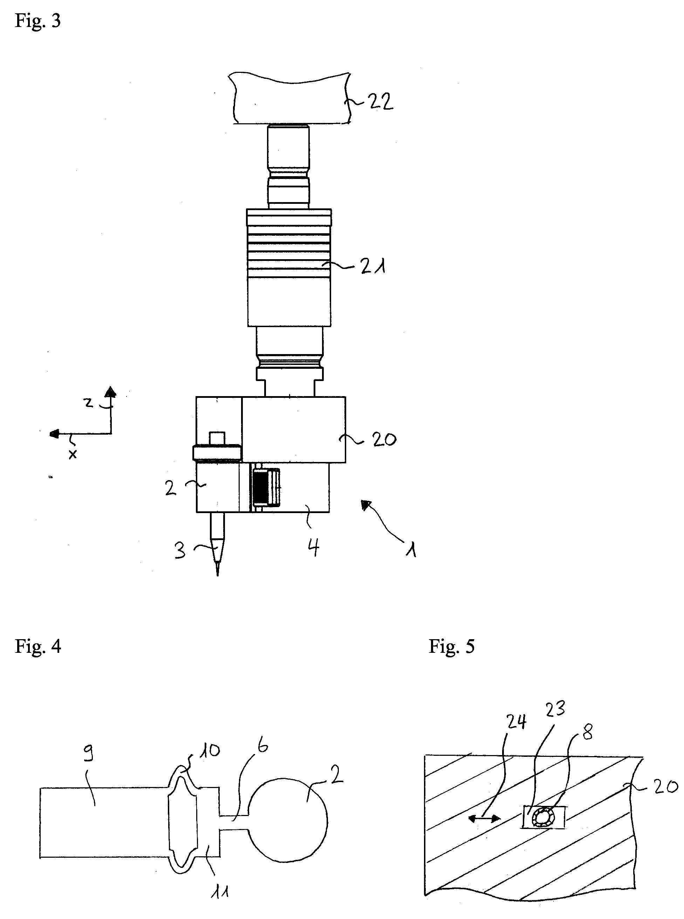

Die Fig. 3 zeigt in seitlicher Ansicht einen solchen Werkzeugkopf 1. Die Aktuatoren 4 und 5 des Werkzeugkopfs 1 sind an einer parallel zur xy-Ebene ausgerichteten Platte 20 befestigt. Die Platte 20 ist über einen piezoelektrischen Antrieb 21 an einer Werkzeugmaschine 22 befestigt. Der piezoelektrische Antrieb 21 ermöglicht die Positionierung des Werkzeugkopfs 1 in einer orthogonal zur Platte 20 verlaufenden Richtung, hier in der z-Richtung, mit einer Genauigkeit, die im Submikrometerbereich liegt. Der piezoelektrische Antrieb 21 ist wie der piezoelektrische Antrieb 12 der Aktuatoren 4 und 5 mit einer Vorspannung zwischen zwei Platten eingeklemmt, die durch einen elastisch deformierbaren Körper beabstandet sind. Ein solcher Körper besteht beispielsweise aus mehreren ringförmigen Plättchen, die durch schmale Stege verbunden sind. Die Plättchen und die Stege sind allerdings keine Einzelteile, sondern aus einem Stück gefertigt. Der vorgespannte Körper wirkt als Feder, so dass der piezoelektrische Antrieb 21 die Platte 20 in positive wie negative z-Richtung auslenken kann.

Die Fig. 4 zeigt in Aufsicht den Körper 9 und die Frontplatte 11 des Aktuators 4. Die Stege 10, die die Frontplatte 11 und den Körper 9 verbinden, sind bei diesem Beispiel anders ausgeführt als beim ersten Beispiel. Die Stege 10 sind u-förmig.

Bevorzugt ist der Werkzeugkopf 1, d.h. die Körper 9, die Stege 10 und die Frontplatten 11 der beiden Aktuatoren 4, 5 sowie die Stege 6 und 7 und die Halterung 2 aus einem Stück Material gefertigt. Der Werkzeugkopf 1 kann aber auch aus Einzelteilen zusammengesetzt sein, die beispielsweise miteinander verklebt oder verlötet sind.

Beispiele für Anwendungen des erfindungsgemässen Werkzeugkopfs 1 werden im folgenden näher beschrieben. Die Liste der Anwendungen ist nicht vollständig.

### Beispiel 1

Bei diesem Beispiel wird der Werkzeugkopf verwendet für die Herstellung von mikromechanischen Strukturen in der Oberfläche eines Werkstücks. Der Werkzeugkopf in der Ausführung gemäss dem Beispiel der Fig. 3 ist an einer Werkzeugmaschine befestigt. In die Halterung 2 ist als Werkzeug 3 ein Stift oder eine Kapillare, im Folgenden allgemein als Kapillare bezeichnet, eingesetzt. Die Werkzeugmaschine platziert die Kapillare über dem Werkstück. Die beiden Aktuatoren 4 und 5 werden je mit einer Wechselspannung beaufschlagt, so dass die Spitze des Werkzeugs im Ultraschallbereich schwingt. Den Wechselspannungen werden sich vergleichsweise langsam ändernde Gleichspannungen überlagert, um die Kapillare über das zu bearbeitende Werkstück zu führen, wobei im Werkstück ein Materialabtrag erfolgt. Über den piezoelektrischen Antrieb 21 wird die Tiefe der im Werkstück entstehenden mikromechanischen Struktur gesteuert, wobei beispielsweise ein Kraftsensor oder ein optischer Distanzsensor für die Ermittlung und Steuerung der z-Position der Kapillare benutzt wird. Solche Mess- und Regelkreise wie auch die Herstellung von Strukturen in einer Oberfläche sind an sich bekannt, weshalb auf weitere Erläuterungen verzichtet wird. Dieses Beispiel unterscheidet sich vom Stand der Technik aber dadurch, dass der erfindungsgemässe Werkzeugkopf die Herstellung von mikromechanischen Strukturen erlaubt, deren Abmessungen viel geringer sind und im Mikrometerbereich oder Submikrometerbereich liegen. Ein wichtiger Vorteil besteht darin, dass die schwingende Spitze des Werkzeugs im Gegensatz zu einer Fräsmaschine keine Stelle enthält, an der die Geschwindigkeit der Spitze Null ist.

### Beispiel 2

Ein beispielsweise nach dem Beispiel 1 hergestelltes Werkstück wird selbst als Werkzeug, d.h. als Stempel, verwendet, der in die Halterung 2 eingesetzt wird, wobei die mit den mikromechanischen Strukturen versehene Oberfläche des Stempels gegen ein zu bearbeitendes Werkstück gedrückt wird. Die beiden Aktuatoren 4 und 5 werden wiederum mit Ultraschall beaufschlagt, so dass die Spitze des Stempels schwingt. Die mit Ultraschallfrequenz schwingenden mikromechanischen Strukturen des Stempels führen dazu, dass im Werkstück ebenfalls mikromechanische Strukturen entstehen.

### Beispiel 3

Der erfindungsgemässe Werkzeugkopf eignet sich auch für die Nachbearbeitung von mikromechanischen Strukturen, insbesondere zum Polieren bzw. Nachschleifen von optischen Oberflächen. Es ist beispielsweise möglich, eine mikromechanische Struktur mit herkömmlichen Mitteln, sei es durch mechanische oder chemische Bearbeitung, in groben Zügen herzustellen und die vorgeformte Oberfläche mittels des erfindungsgemässen Werkzeugkopfs nachzubearbeiten.

Das Schleifen der Oberfläche des Werkstücks wird bei diesen drei Beispielen vorzugsweise unterstützt durch ein Schleifmittel, wie dies auch im Stand der Technik üblich ist. Wenn als Werkzeug eine Kapillare mit einer Längsbohrung verwendet wird, dann kann das Schleifmittel durch die Längsbohrung der Kapillare zugeführt werden. Anstelle des Schleifmittels oder zusätzlich zum Schleifmittel kann eine Ätzmittel durch die Längsbohrung der Kapillare zugeführt werden. Dies ermöglicht ein selektives Ätzen der Oberfläche des Werkstücks.

### Beispiel 4

Der erfindungsgemässe Werkzeugkopf ist am Bestückungskopf eines Montageautomaten, beispielsweise eines als Pick and Place System bekannten Montageautomaten, montiert. In die Halterung 2 ist eine mit Vakuum beaufschlagbare Kapillare eingesetzt, die als Sauggreifer zur Aufnahme eines Bauteils, insbesondere eines optischen oder optoelektrischen Bauteils, dient. Der Montageautomat führt alle bekannten Funktionen aus, ist aber dank des Werkzeugkopfs in der Lage, ein Bauteil mit höchster Genauigkeit zu montieren, da die beiden Aktuatoren 4 und 5 des Werkzeugkopfs im Submikrometerbereich liegende Bewegungen ermöglichen. Mit einem solchen Montageautomaten lassen sich auch Mikrosysteme zusammenbauen, seien dies nun optische Systeme oder mikromechanische Systeme, wie sie insbesondere in der Telekommunikation und in der Medizin verwendet werden können.

### Beispiel 5

Es sind auch Anwendungen möglich, bei denen die Erzeugung einer Ultraschallschwingung in einer einzigen Raumrichtung genügt. Bei diesen Anwendungen genügt deshalb der Aktuator 4 und der Aktuator 5 kann entfallen. Bei einer ersten Ausführung wirkt der Steg 6 als Verstärker für die Ultraschallschwingungen. Damit die am Ende des Stegs 6 angeordnete Halterung 2 nicht zu quer zur Längsrichtung des Stegs 6 gerichteten Schwingungen angeregt wird, wird die Halterung 2 vorzugsweise in einem Führungselement geführt, wie dies in der Fig. 5 illustriert ist. Die nicht massstäblich gezeichnete Fig. 5 zeigt in Aufsicht die Platte 20, an deren Unterseite der (hier nicht sichtbare) Aktuator 4 befestigt ist. Die Platte 20 weist einen Schlitz 23 auf, in dem die Halterung 2, im Beispiel die die Spannzange schliessende Mutter 8 der Halterung 2, hydrostatisch, beispielsweise in einem Ölfilm oder einem Luftlager, gelagert ist. Die Bewegungsrichtung des Stegs 6 ist durch einen Doppelpfeil 24 dargestellt. Bei einer zweiten Ausführung ist die Halterung 2 direkt mit der Frontplatte 11 verbunden, d.h. auch der Steg 6 entfällt. Ein solcher Werkzeugkopf mit einem einzigen Aktuator 4 kann beispielsweise als Bohrer in einer Zahnarztpraxis verwendet werden. Der Werkzeugkopf wird dabei mit einem handelsüblichen Zahnarztbohrer bestückt. Die Bearbeitung des Zahns erfolgt in diesem Fall aber nicht durch Rotieren des Zahnarztbohrers, sondern durch Schwingen des Zahnarztbohrers mit Ultraschall.

## Patentansprüche

1. Werkzeugkopf mit einer Halterung (2) für die Aufnahme eines Werkzeugs (3), **gekennzeichnet durch** zwei an einer Platte (20) befestigbare Aktuatoren (4, 5), die je einen Körper (9) und eine mit dem Körper (9) **durch** Stege (10) verbundene Frontplatte (11) sowie ein piezoelektrisches Element (12) umfassen, wobei das piezoelektrische Element (12) Auslenkungen und Schwingungen der Frontplatte (11) relativ zum Körper (9) ermöglicht und wobei die Frontplatten (11) der beiden Aktuatoren (4, 5) **durch** je einen von der Frontplatte (11) abstehenden Steg (6 bzw. 7) mit der Halterung (2) verbunden sind.

2. Werkzeugkopf nach Anspruch 1, **dadurch gekennzeichnet, dass** die Aktuatoren (4, 5) an einer Platte (20) befestigt sind und dass die Platte (20) mittels eines piezoelektrischen Antriebs (21) in einer senkrecht zur Platte (20) verlaufenden Richtung hin und her bewegbar ist.

3. Werkzeugkopf mit einer Halterung (2) für die Aufnahme eines Werkzeugs (3), **gekennzeichnet durch** einen an einer Platte befestigbaren Aktuator (4), der einen Körper (9) und eine mit dem Körper (9) **durch** Stege (10) verbundene Frontplatte (11) sowie ein piezoelektrisches Element (12) umfasst, wobei das piezoelektrische Element (12) Auslenkungen und Schwingungen der Frontplatte (11) relativ zum Körper (9) ermöglicht und wobei die Frontplatte (11) und die Halterung (2) **durch** einen Steg (6) verbunden sind.

4. Werkzeugkopf nach Anspruch 3, **dadurch gekennzeichnet, dass** die Halterung (2) in einem Führungselement geführt ist.

5. Werkzeugkopf mit einer Halterung (2) für die Aufnahme eines Werkzeugs (3), **gekennzeichnet durch** einen an einer Platte befestigbaren Aktuator (4), der einen Körper (9) und eine mit dem Körper (9) **durch** Stege (10) verbundene Frontplatte (11) sowie ein piezoelektrisches Element (12) umfasst, wobei das piezoelektrische Element (12) Auslenkungen und Schwingungen der Frontplatte (11) relativ zum Körper (9) ermöglicht und wobei die Frontplatte (11) und die Halterung (2) direkt miteinander verbunden sind.
